# EUROPÄISCHE PATENTSCHRIFT

(11) **EP 2 789 068 B1**
(45) Veröffentlichungstag und Bekanntmachung des Hinweises auf die Patenterteilung: **02.03.2016**
(21) Anmeldenummer: 12810132.6
(22) Anmeldetag: 04.12.2012
(51) Int. Cl.: H02J 3/36, H01H 33/59

(54) **SCHALTUNGSANORDNUNG ZUR REDUKTION DER STROMSTÄRKE IN EINER HOCHSPANNUNGS-GLEICHSTROM-ÜBERTRAGUNGSLEITUNG, HOCHSPANNUNGS-GLEICHSTROM-ÜBERTRAGUNGSANLAGE UND VERFAHREN ZUM REDUZIEREN DER STROMSTÄRKE EINES ELEKTRISCHEN STROMES**
CIRCUIT ARRANGEMENT FOR REDUCING THE CURRENT INTENSITY IN A HIGH-VOLTAGE DC TRANSMISSION LINE, HIGH-VOLTAGE DC TRANSMISSION INSTALLATION, AND METHOD FOR REDUCING THE CURRENT INTENSITY OF AN ELECTRICAL CURRENT
CIRCUITERIE POUR LA RÉDUCTION DE L'INTENSITÉ DU COURANT DANS UNE LIGNE DE TRANSMISSION DE COURANT CONTINU À HAUTE TENSION, INSTALLATION DE TRANSMISSION DE COURANT CONTINU À HAUTE TENSION ET PROCÉDÉ POUR LA RÉDUCTION DE L'INTENSITÉ D'UN COURANT ÉLECTRIQUE

(30) Priorität: 18.01.2012 DE 102012200679
(43) Veröffentlichungstag der Anmeldung: 15.10.2014
(73) Patentinhaber: Siemens Aktiengesellschaft, 80333 München (DE)
(72) Erfinder: SCHÖN, Andre, 95447 Bayreuth (DE); KOSSE, Sylvio, 91052 Erlangen (DE)
(86) Internationale Anmeldenummer: PCT/EP2012/074330
(87) Internationale Veröffentlichungsnummer: WO 2013/107556

(56) Entgegenhaltungen:
- JP-A- 2009 181 864

## Beschreibung

Die Erfindung betrifft eine Schaltungsanordnung zur Reduktion der Stromstärke eines in einer Hochspannungs-Gleichstrom-Übertragungsleitung fließenden elektrischen Stromes, nämlich insbesondere zum Erzeugen eines Nulldurchgangs des Stromes. Die Schaltungsanordnung weist einen Schaltungsknoten auf, welcher zum Verbinden der Schaltungsanordnung mit der Hochspannungs-Gleichstrom-Übertragungsleitung dient. Die Schaltungsanordnung umfasst auch einen zwischen dem Schaltungsknoten und einem Bezugspotenzial geschalteten und einen Kondensator sowie eine Spule umfassenden LC-Schwingkreis, welcher zum Erzeugen eines Stromimpulses von der Hochspannungs-Gleichstrom-Übertragungsleitung über die Schaltungsanordnung hin zum Bezugspotenzial und somit zur Reduktion der Stromstärke in der Hochspannungs-Gleichstrom-Übertragungsleitung ausgebildet ist. Zwischen dem Schaltungsknoten und dem LC-Schwingkreis ist ein Schaltelement gekoppelt, welches zum Koppeln der Hochspannungs-Gleichstrom-Übertragungsleitung mit dem LC-Schwingkreis dient. Die Erfindung betrifft außerdem eine Hochspannungs-Gleichstrom-Übertragungsanlage zum Übertragen von elektrischer Energie über längere Strecken, wie auch ein Verfahren zum Reduzieren der Stromstärke eines elektrischen Stromes.

Vorliegend richtet sich das Interesse auf eine Hochspannungs-Gleichstrom-Übertragung, welche auch unter der Bezeichnung HVDC (High Voltage Direct Current) bekannt ist. Es handelt sich dabei um eine Anlage, welche zum Übertragen von elektrischer Energie über längere Strecken dient. Die Übertragung großer Leistungen, nämlich ab etwa 1000 MW aufwärts, über Entfernungen von einigen hundert Kilometern über technisch handhabbare Leitungsdurchmesser erzwingt sehr hohe elektrische Spannungen von über 400 kV. Somit kann die Stromstärke des Stromes unterhalb 5 kA, bevorzugt unterhalb 2,5 kA, bleiben. Für die HVDC, insbesondere zum Aufbau von HVDC-Multi-Terminal-Systemen und HVDC-Netzsystemen, werden Schalter benötigt, mittels denen der Stromkreis gegebenenfalls unterbrochen werden kann. Diese elektrischen Schalter werden auch als "HVDC circuit breaker" bezeichnet. Diese Schalter müssen sowohl Nennströme einerseits als auch Kurzschlussströme andererseits sicher abschalten können. Während die DC-Nennspannungen aktuell bis +/- 550 kV und in Zukunft sogar 800 bis 1000 kV betragen können, beträgt der Nennwert des Stromes - wie bereits ausgeführt - etwa 2 bis 5 kA. Die Stromstärke eines Kurzschlussstromes beträgt sogar ein Vielfaches davon. Um bei derartig hohen Strömen und Spannungen den Strom in der Übertragungsleitung sicher trennen zu können, muss durch eine geeignete Schaltungsanordnung ein Stromnulldurchgang (current zero) in dem Hauptstrompfad - also in der Übertragungsleitung - erzeugt werden, und die im System gespeicherte magnetische Energie muss durch geeignete Maßnahmen abgeführt werden.

Das Interesse gilt vorliegend einer solchen Schaltungsanordnung, welche zum Erzeugen eines Nulldurchgangs des Stromes in der Hochspannungs-Gleichstrom-Übertragungsleitung, und allgemein gesagt zum Reduzieren der Stromstärke des Stromes, dient, um ein sicheres Unterbrechen des Stromes in der Übertragungsleitung zu ermöglichen. Eine derartige Schaltungsanordnung dient also zu einer kurzzeitigen - z.B. einige Millisekunden andauernden - Reduktion der Stromstärke, sodass innerhalb dieser kurzen Zeit der in die Übertragungsleitung integrierte Schalter sicher geöffnet und der Stromkreis unterbrochen werden können.

In der Literatur wurde bereits eine Vielzahl von Lösungen diskutiert, wie der Stromkreis in einer Hochspannungs-Gleichstrom-Übertragungsleitung sicher und zuverlässig unterbrochen werden kann. Der Großteil der vorgeschlagenen Schaltungsanordnungen basiert darauf, den Strom durch geeignete Maßnahmen - etwa eine große Lichtbogenspannung - in einen zum Hauptstrompfad parallel liegenden Kommutierungszweig einzukoppeln und in diesem Kommutierungszweig zu löschen. Eine solche Lösung wird beispielsweise im folgenden Dokument beschrieben: Christian M. Franck HVDC Circuit Breakers: A Review Identifying Future Research Needs, IEEE transections on power delivery, Vol. 26, p. 998-1007, April 2011.

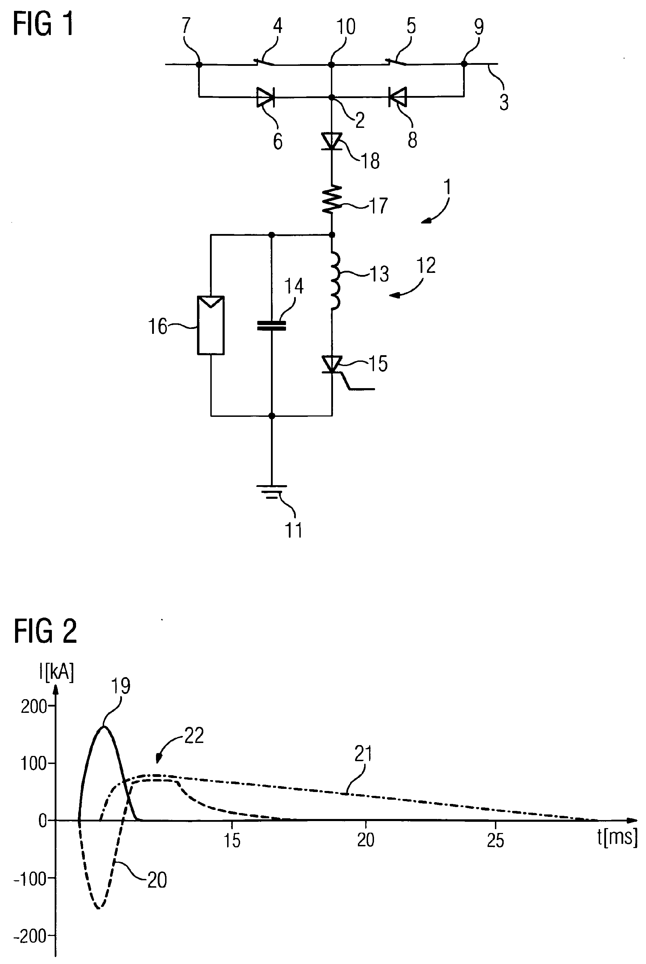

Ein anderer bekannter Ansatz geht dahin, in einem Schaltungszweig quer zum Hauptstrompfad einen ausreichend großen Stromimpuls zu erzeugen und den abzuschaltenden Strom so kurzzeitig vollständig auf diesen Querzweig zu lenken. Dadurch entsteht ein Stromnulldurchgang im Hauptstrompfad, welcher zum Unterbrechen eines Lichtbogens - beispielsweise in einem Vakuumschalter - ausreichend ist. Eine derartige, aus dem Stand der Technik bereits bekannte Schaltungsanordnung ist in FIG 1 dargestellt. Diese insgesamt mit 1 bezeichnete Schaltungsanordnung weist einen Schaltungsknoten 2 auf, über welchen die Schaltungsanordnung 1 mit der Hochspannungs-Gleichstrom-Übertragungsleitung 3 gekoppelt ist. In die Übertragungsleitung 3 sind zwei elektrische Schalter 4, 5 integriert, welche zum Unterbrechen des Stromkreises in der Übertragungsleitung 3 dienen. Der Schaltungsknoten 2 ist über eine erste Diode 6 mit einem ersten Knoten 7 der Übertragungsleitung 3 sowie über eine zweite Diode 8 mit einem zweiten Knoten 9 gekoppelt, wobei der Schaltungsknoten 2 mit den jeweiligen Kathoden der Dioden 6, 8 verbunden ist. Der Schaltungsknoten 2 ist außerdem mit einem zwischen den Schaltern 4, 5 liegenden Knoten 10 direkt verbunden. Zwischen dem Schaltungsknoten 2 und einem Bezugspotenzial 11 (Masse bzw. Erde oder eine Minusleitung) umfasst die Schaltungsanordnung 1 einen LC-Schwingkreis 12, welcher ein Parallelschwingkreis ist. Dies bedeutet, dass eine Spule 13 parallel zu einem Kondensator 14 geschaltet ist, wobei in Reihe zur Spule 13 ein Thyristor 15 geschaltet ist. Parallel zum Kondensator 14 ist ein Varistor 16 vorgesehen. In Reihe mit dem LC-Schwingkreis 12 sind außerdem ein Widerstand 17 sowie ein Schaltelement 18 geschaltet. Das Schaltelement 18 dient zum Koppeln der Schaltungsanordnung 1 mit der Übertragungsleitung 3 und ist im Stand der Technik als einfache Diode ausgeführt, deren Anode mit dem Knoten 10 und deren Kathode mit dem LC-Schwingkreis verbunden ist. Zunächst wird der Kondensator 14 auf das elektrische Potenzial der Hochspannung aufgeladen, nämlich über die Diode 18. Wird nun der Thyristor 15 gezündet, fließt die Ladung von dem Kondensator 14 hin zu der Spule 13, sodass der Kondensator 14 durch die Spule 13 umgeladen wird. Dies bedeutet, dass sich die Polarität der Spannung an dem Kondensator 14 verändert. Sobald hierbei die Spannung an der Diode 18 positiv wird, beginnt der Strom von der Übertragungsleitung 3 in die Schaltungsanordnung 1 zu kommutieren, und es entsteht ein Stromimpuls von der Übertragungsleitung 3 hin zur Schaltungsanordnung 1. Dieser Stromimpuls bewirkt, dass sich die Stromstärke des Stromes in der Übertragungsleitung 3 kurzzeitig verringert.

In Fig. 2 sind zeitliche Verläufe von Strömen dargestellt, wie sie bei der Schaltungsanordnung gemäß dem Stand der Technik auftreten können. In FIG 2 ist dabei ein zeitlicher Verlauf 19 des elektrischen Stromes durch den Thyristor 15, ein zeitlicher Verlauf 20 des Stromes durch den Kondensator 14 sowie ein zeitlicher Verlauf 21 des Stromes durch die Diode 18 dargestellt. Wie aus FIG 2 hervorgeht, beginnt der Strom durch die Diode 18 zu fließen, sobald der Kondensator entladen wird und die gesamte Energie in der Spule 13 gespeichert ist bzw. die Spannung am Kondensator 14 unter die Spannung am Knoten 10 fällt. Dann wird der Kondensator 14 wieder aufgrund des Stromimpulses aufgeladen, wobei aufgrund des Widerstandes 17 und der Dimensionierung des Kondensators 14 das Maximum 22 des Stromes durch die Diode 18 relativ gering ist.

Die Schaltungsanordnung 1 gemäß FIG 1 hat also den entscheidenden Nachteil, dass sie einerseits aufgrund des Widerstandes 17 und insbesondere aufgrund der Größe und der Kosten des Kondensators 14 relativ viel Bauraum beansprucht und relativ teuer ist sowie andererseits der erzeugte Stromimpuls relativ "schwach" ist.

Es ist Aufgabe der Erfindung, eine Lösung aufzuzeigen, wie bei einer Schaltungsanordnung der eingangs genannten Gattung die Stromstärke des Stromes in der Hochspannungs-Gleichstrom-Übertragungsleitung besonders zuverlässig reduziert werden kann und hierbei die Komplexität der Schaltungsanordnung im Vergleich zum Stand der Technik verringert werden kann.

Diese Aufgabe wird erfindungsgemäß durch eine Schaltungsanordnung, durch eine Hochspannungs-Gleichstrom-Übertragungsanlage, sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Schaltungsanordnung ist zur Reduktion der Stromstärke eines in einer Hochspannungs-Gleichstrom-Übertragungsleitung (nachfolgend auch als "Übertragungsleitung" genannt) fließenden elektrischen Stromes ausgebildet, nämlich insbesondere zum Erzeugen eines Nulldurchgangs des Stromes. Die Schaltungsanordnung umfasst einen Schaltungsknoten bzw. einen Anschluss zum Verbinden mit der Übertragungsleitung, wie auch einen zwischen dem Schaltungsknoten und einem Bezugspotenzial geschalteten LC-Schwingkreis zum Erzeugen eines Stromimpulses von der Übertragungsleitung über die Schaltungsanordnung hin zum Bezugspotenzial, wobei der LC-Schwingkreis einen Kondensator und eine Spule aufweist. Die Schaltungsanordnung umfasst auch ein zwischen dem Schaltungsknoten und dem LC-Schwingkreis gekoppeltes Schaltelement zum Koppeln der Übertragungsleitung mit dem LC-Schwingkreis. Erfindungsgemäß ist vorgesehen, dass das Schaltelement ein steuerbares Schaltelement mit einem Steueranschluss ist, sodass dieses Schaltelement mittels einer elektronischen Steuereinrichtung gesteuert bzw. geschaltet werden kann.

Der erfindungsgemäße Effekt wird also dadurch erzielt, dass der LC-Schwingkreis mit der Übertragungsleitung über ein steuerbares Schaltelement gekoppelt wird. Auf diesem Wege gelingt es, den Kondensator des LC-Schwingkreises zunächst vollständig auf eine negative Spannung aufzuladen (also umzuladen) und so bei gleicher Kapazität insgesamt mehr Ladung für den Stromimpuls zur Verfügung zu stellen. Für einen vergleichbaren Stromimpuls kann also ein deutlich kleinerer Kondensator (etwa um Faktor 4) verwendet werden. Auf der anderen Seite kann mit dem gleichen Kondensator ein stärkerer Stromimpuls als mit der Schaltungsanordnung gemäß FIG 1 erzeugt werden. die Größe des verwendeten Kondensators hängt dabei insbesondere direkt mit der beim Abschalten aufzunehmenden Energie zusammen, sodass diese durch die erfindungsgemäße Schaltungsanordnung ebenfalls reduziert werden kann. Ein weiterer Vorteil der erfindungsgemäßen Schaltungsanordnung besteht darin, dass aufgrund des steuerbaren Schaltelements auf den Widerstand 17 gemäß FIG 1 verzichtet werden kann, sodass sich der Einsatz eines zusätzlichen Widerstandes mit den damit verbundenen Nachteilen hinsichtlich der Kosten und insbesondere auch des wertvollen Bauraums erübrigt. Mit der hier vorgeschlagenen Schaltungsanordnung ist außerdem - und zwar aufgrund des Schwingungsverhaltens des RLC-Schwingkreises bestehend aus dem Kondensator 14, der Spule 13 und dem Widerstand 17 - der direkte Kurzschluss der Übertragungsleitung über die Schaltungsanordnung, wie er im Stand der Technik möglich ist, ausgeschlossen.

Bei von der Schaltungsanordnung entfernten Kurzschlüssen kommt es darüber hinaus aufgrund der Leitungsimpedanz zu einer Schwingung der elektrischen Spannung an der Schaltungsanordnung. Die Schwingungsamplitude liegt hier sogar zwischen der Nennspannung und Null. Im Gegensatz zur Schaltungsanordnung gemäß FIG 1, die bei Nennspannung an der Schaltungsanordnung keinen Stromimpuls erzeugen kann und im ungünstigsten Fall auch einen dauerhaften Kurzschluss zur Erde bzw. Minusschiene verursacht, kann die erfindungsgemäße Schaltungsanordnung auch bei Nennspannungen sicher und zuverlässig einen entsprechenden Stromimpuls erzeugen.

Unter einer Hochspannungs-Gleichstrom-Übertragungsleitung wird vorliegend eine elektrische Leitung einer HVDC-Anlage verstanden, mittels welcher elektrische Energie über längere Strecken - insbesondere über mehrere 100 km - übertragen werden kann. Die Übertragungsleitung ist also eine elektrische Leitung, welche zum Betrieb mit Spannungen von mehreren 100 kV ausgebildet ist und die Übertragung des Gleichstromes über die genannten Strecken ermöglicht. Der Nennwert dieses Gleichstromes liegt vorzugsweise in einem Wertebereich von 2 bis 5 kA. Entsprechend ist auch die erfindungsgemäße Schaltungsanordnung zum Betrieb mit hohen Spannungen und hohen Strömen ausgebildet, nämlich mit Spannungen von einigen 100 kV und mit Strömen in dem genannten Wertebereich.

Bevorzugt dient die Schaltungsanordnung zu einer kurzzeitigen - einige Millisekunden andauernden - Reduktion der Stromstärke des Stromes. Diese Zeit ist insbesondere ausreichend, um einen in die Übertragungsleitung integrierten Schalter zu öffnen und somit den Stromkreis in der Übertragungsleitung sicher unterbrechen zu können.

Das Schaltelement ist in einer Ausführungsform ein Thyristor oder ein IGBT oder ein IGCT. Je nach der Stromstärke des Stromes kann somit jeweils das optimale Schaltelement eingesetzt werden, welches für ein sicheres Erzeugen des Stromimpulses sorgt.

Besonders bevorzugt ist es, wenn der LC-Schwingkreis - anders als bei der Schaltungsanordnung gemäß FIG 1 - ein Serienschwingkreis ist. Diese Ausführungsform dient der Begrenzung des Stromanstieges, sodass der Stromfluss durch das Schaltelement begrenzt ist. Dies erweist sich insbesondere dann als besonders vorteilhaft, wenn auf den Widerstand 17 gemäß FIG 1 verzichtet wird.

Es erweist sich als besonders vorteilhaft, wenn die Schaltungsanordnung eine Steuereinrichtung zum Ansteuern des Schaltelements aufweist, welche dazu eingerichtet ist, vor dem Schließen des Schaltelements bzw. vor Erzeugen des Stromimpulses zunächst ein Umladen des Kondensators zu veranlassen. Dies bedeutet, dass vor dem Schließen des Schaltelements - noch bevor der Stromimpuls in der Schaltungsanordnung erzeugt wird - zunächst der Kondensator auf eine negative Spannung bzw. auf eine Spannung mit einer gegenüber der Spannung der Übertragungsleitung umgekehrten Polarität aufgeladen wird. Dies hat den Vorteil, dass insgesamt mehr Ladung durch das Schaltelement fließen kann und somit ein relativ starker Stromimpuls mit einer hohen Amplitude erzeugt werden kann. Die Erzeugung des Stromimpulses erfolgt dann auch besonders schnell, weil der Kondensator bereits vor dem Schließen des Schaltelements umgeladen wird, und nicht etwa - wie bei der Schaltungsanordnung gemäß Fig. 1 - nach Schließen des Thyristors 15.

In einer Ausführungsform ist vorgesehen, dass parallel zu dem LC-Schwingkreis ein von dem Schaltelement separater elektrischer Schalter gekoppelt ist. Somit kann ohne viel Aufwand die Ausführungsform verwirklicht werden, bei welcher vor dem Schließen des Schaltelements der Kondensator zunächst umgeladen wird. Zu diesem Zwecke kann nämlich beispielsweise lediglich der separate Schalter geschlossen und so lange im geschlossenen Zustand gehalten werden, bis der Kondensator mit einer negativen Spannung aufgeladen ist. Dann kann dieser separate Schalter wieder geöffnet werden, und der LC-Schwingkreis ist zum Erzeugen des Stromimpulses bereit.

Die oben genannte Steuereinrichtung kann auch dazu eingerichtet sein, das Schaltelement und den separaten Schalter derart anzusteuern, dass jeweils maximal wahlweise entweder nur der Schalter oder aber nur das Schaltelement leitend geschaltet ist. Somit wird ein Kurzschluss zwischen der Übertragungsleitung einerseits und dem Bezugspotenzial andererseits verhindert.

Es kann auch vorgesehen sein, dass ein Widerstand, insbesondere ein Varistor, parallel zum Kondensator geschaltet ist. Mittels eines derartigen Varistors kann der Stromfluss in Abhängigkeit von der anliegenden Spannung gesteuert werden.

Zur Erfindung gehört auch eine Hochspannungs-Gleichstrom-Übertragungsanlage mit einer Hochspannungs-Gleichstrom-Übertragungsleitung zum Übertragen eines elektrischen Stromes. Die Übertragungsanlage weist einen in die Übertragungsleitung integrierten elektrischen Schalter zum Unterbrechen eines Stromkreises in der Übertragungsleitung auf, wie auch eine mit der Übertragungsleitung verbundene erfindungsgemäße Schaltungsanordnung.

Bei der Übertragungsanlage kann vorgesehen sein, dass die Schaltungsanordnung als Schaltmodul ausgebildet ist und zwischen der Übertragungsleitung und dem Bezugspotenzial zumindest zwei solche Schaltmodule bzw. Schaltzellen in Reihe geschaltet sind. In Abhängigkeit von der verwendeten Spannung, welche an der Übertragungsleitung anliegt, kann somit jeweils die optimale Anzahl der Schaltmodule verwendet werden.

Ein erfindungsgemäßes Verfahren dient zum Reduzieren der Stromstärke eines elektrischen Stromes, der über eine Hochspannungs-Gleichstrom-Übertragungsleitung übertragen wird, mit Hilfe einer elektrischen Schaltungsanordnung, welche über einen Schaltungsknoten mit der Hochspannungs-Gleichstrom-Übertragungsleitung verbunden ist, wobei zum Reduzieren der Stromstärke (zum sicheren Unterbrechen des Stromflusses in der Übertragungsleitung) ein Stromimpuls in der Schaltungsanordnung mittels eines zwischen dem Schaltungsknoten und einem Bezugspotenzial geschalteten LC-Schwingkreises erzeugt wird, indem die Hochspannungs-Gleichstrom-Übertragungsleitung über ein Schaltelement mit dem LC-Schwingkreis gekoppelt wird. Mittels einer Steuereinrichtung wird an einem Steueranschluss des Schaltelements ein Steuersignal bereitgestellt, mittels welchem das Schaltelement leitend geschaltet wird und hierdurch die Hochspannungs-Gleichstrom-Übertragungsleitung mit dem LC-Schwingkreis zum Erzeugen des Stromimpulses gekoppelt wird.

Die mit Bezug auf die erfindungsgemäße Schaltungsanordnung vorgestellten bevorzugten Ausführungsformen und deren Vorteile gelten entsprechend für die erfindungsgemäße Übertragungsanlage sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen, oder aber in Alleinstellung verwendbar.

Die Erfindung wird nun anhand eines bevorzugten Ausführungsbeispiels, wie auch unter Bezugnahme auf die beigefügten Zeichnungen näher erläutert.

Es zeigen:
- FIG 1: in schematischer Darstellung eine Schaltungsanordnung gemäß dem Stand der Technik;
- FIG 2: zeitliche Verläufe von Strömen in der Schaltungsanordnung gemäß FIG 1;
- FIG 3: in schematischer Darstellung eine Übertragungsanlage mit einer Schaltungsanordnung gemäß einer Ausführungsform der Erfindung;
- FIG 4: zeitliche Verläufe von Strömen in der Schaltungsanordnung gemäß FIG 3; und
- FIG 5: in schematischer Darstellung eine Übertragungsanlage gemäß einer Ausführungsform der Erfindung, wobei mehrere Schaltmodule miteinander in Reihe geschaltet sind.

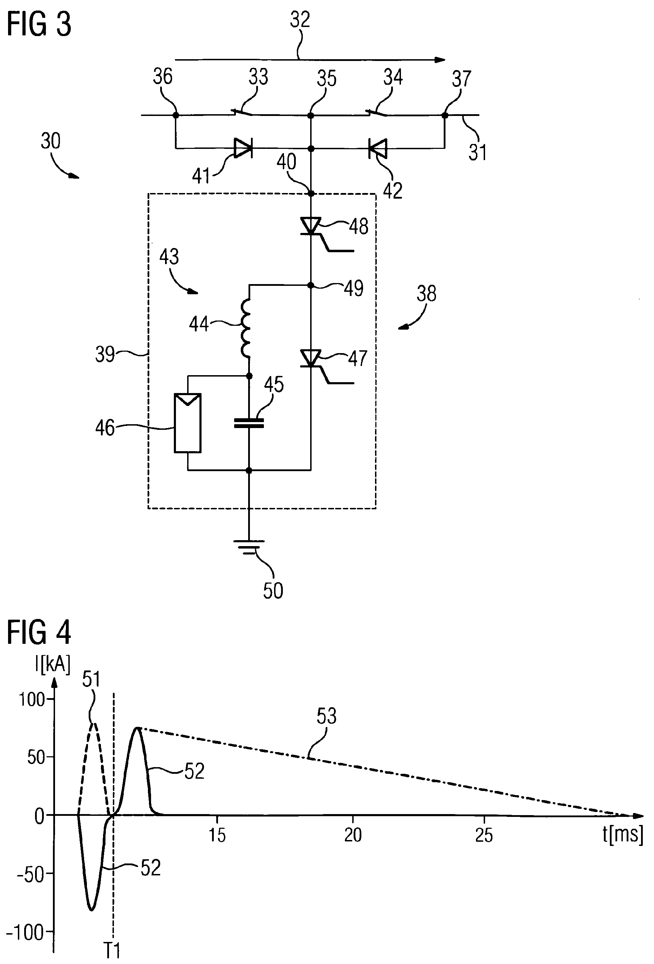

In FIG 3 ist eine Hochspannungs-Gleichstrom-Übertragungsanlage 30 gemäß einer Ausführungsform der Erfindung dargestellt, welche nachfolgend der Einfachheit halber als Übertragungsanlage bezeichnet wird. Die Übertragungsanlage 30 hat eine Hochspannungs-Gleichstrom-Übertragungsleitung 31 (nachfolgend als "Übertragungsleitung" bezeichnet), welche zum Übertragen von Gleichströmen großer Stromstärke über längere Strecken ausgebildet ist. Mit einer Pfeildarstellung 32 ist die Richtung des Stromflusses des Hauptstrompfades exemplarisch dargestellt, wobei die Übertragungsanlage 30 dazu geeignet ist, den elektrischen Strom unabhängig von seiner Übertragungsrichtung abzuschalten. Es können somit grundsätzlich bidirektionale Ströme abgeschaltet werden. In die Übertragungsleitung 31 sind elektrische Schalter integriert, wobei in FIG 3 bei dem dargestellten Leitungsabschnitt zwei elektrische Schalter 33, 34 dargestellt sind. Zwischen den Schaltern 33, 34 liegt ein Knoten 35. Während der Schalter 33 zwischen dem Knoten 35 einerseits und einem Knoten 36 andererseits liegt, ist der Schalter 34 zwischen dem Knoten 35 einerseits und einem Knoten 37 andererseits angeordnet.

Zur Übertragungsanlage 30 gehört auch eine Schaltungsanordnung 38, welche im Ausführungsbeispiel als Schaltmodul bzw. Schaltzelle 39 ausgebildet ist. Die Schaltungsanordnung 38 weist einen Anschluss bzw. Schaltungsknoten 40 auf, über welchen die Schaltungsanordnung 38 mit dem Knoten 35 verbunden ist. Der Schaltungsknoten 40 ist außerdem über eine erste Diode 41 mit dem Knoten 36 sowie über eine zweite Diode 42 mit dem Knoten 37 gekoppelt. Der Schaltungsknoten 40 ist dabei mit den jeweiligen Kathoden der Dioden 41, 42 verbunden.

Die Schaltungsanordnung 38 beinhaltet einen LC-Schwingkreis 43, welcher aus einer Spule 44 sowie einem Kondensator 45 besteht. Es handelt sich hier um eine Reihenschaltung bzw. einen Serienschwingkreis aus der Spule 44 und dem Kondensator 45. Parallel zum Kondensator 45 ist auch ein Varistor 46 geschaltet. Außerdem ist parallel zum LC-Schwingkreis 43 ein elektrischer Schalter 47 gekoppelt, welcher im Ausführungsbeispiel ein Thyristor ist.

Die Spule 44 ist also in Reihe zu der Parallelschaltung aus dem Varistor 46 und dem Kondensator 45 geschaltet, und diese gesamte Reihenschaltung ist parallel zum Thyristor 47 geschaltet.

Die Schaltungsanordnung 38 beinhaltet auch ein steuerbares Schaltelement 48, welches im Ausführungsbeispiel als Thyristor ausgebildet sein kann. Über das Schaltelement 48 kann die Schaltungsanordnung 38 mit dem Knoten 35 bzw. dem Schaltungsknoten 40 und hierdurch mit der Übertragungsleitung 31 gekoppelt werden. Das Schaltelement 48 verbindet somit den Schaltungsknoten 40 mit einem Knoten 49, an welchem die Spule 44 einerseits sowie der Schalter 47 andererseits zusammengeführt sind.

Auf der anderen Seite ist der Kondensator 45 sowie der Varistor 46 und der Schalter 47 mit einem Bezugspotenzial 50 verbunden, welches beispielsweise das Potenzial der Erde sein kann.

Zur Ansteuerung des Schalters 47 sowie des Schaltelements 48 dient eine in den Figuren nicht näher dargestellte elektronische Steuereinrichtung. Diese ist so eingerichtet, dass die beiden Halbleiterschalter 47, 48 antiparallel angesteuert werden, sodass zu jedem Zeitpunkt jeweils maximal einer der Halbleiterschalter 47, 48 sich im leitenden Zustand befindet. Die Funktionsweise der Schaltungsanordnung 38 wird nachfolgend näher beschrieben:

Mit der Schaltungsanordnung 38 kann ein Stromimpuls erzeugt werden, welcher bewirkt, dass der durch die Übertragungsleitung 31 fließende Strom kurzzeitig in die Schaltungsanordnung 38 eingekoppelt wird und sich somit die Stromstärke des Stromes in der Übertragungsleitung 31 reduziert. Somit kann ein Nulldurchgang des Stromes in der Übertragungsleitung 31 erzwungen werden, bei welchem die elektrischen Schalter 33, 34 sicher geöffnet werden können. Die Erzeugung des Stromimpulses durch die Schaltungsanordnung 38 erfolgt durch Schließen des Schaltelements 48, indem mittels der Steuereinrichtung ein Steuersignal an einem Steueranschluss des Schaltelements 48 angelegt wird. Bevor dieses Schaltelement 48 jedoch geschlossen wird, wird zunächst der Kondensator 45 umgeladen. Dies erfolgt derart, dass der Schalter 47 so lange im geschlossenen Schaltzustand gehalten wird, bis der zunächst positiv aufgeladene Kondensator 45 seine Ladung zugunsten der Spule 44 verliert und dann anschließend umgeladen wird. Bei einem umgeladenen Kondensator 45 kann nämlich ein Stromimpuls mit einer im Vergleich zum Stand der Technik deutlich größeren Amplitude erzeugt werden, und zwar bei der gleichen Größe des eingesetzten Kondensators 45. Das Umladen des Kondensators 45 bedeutet an dieser Stelle, dass der Kondensator 45 mit einer negativen Spannung aufgeladen wird, also mit einer gegenüber der Übertragungsleitung 41 umgekehrten Polarität. Ist der Kondensator 45 umgeladen, so kann dann jederzeit das Schaltelement 48 geschlossen werden, um den Stromimpuls zu erzeugen.

In FIG 4 sind zeitliche Verläufe von Strömen in der Schaltungsanordnung 38 gemäß FIG 3 dargestellt. Auf der Y-Achse ist dabei allgemein der Strom I in kA aufgetragen, während auf der X-Achse die Zeit t in Millisekunden aufgetragen ist. In FIG 4 ist sowohl ein Verlauf 51 des Stromes durch den Schalter 47 als auch ein zeitlicher Verlauf 52 des Stromes durch den Kondensator 45, wie auch ein zeitlicher Verlauf 53 des Stromes durch das Schaltelement 48 dargestellt. Wie aus FIG 4 hervorgeht, wird zunächst der Schalter 47 geschlossen, sodass der zunächst positiv aufgeladene Kondensator 45 seine Ladung an die Spule 44 verliert, sodass durch den Kondensator 45 ein negativer Strom fließt, bis der Kondensator 45 umgeladen ist. Beim umgeladenen Kondensator 45 ist die gesamte Ladung im Kondensator 45 gespeichert, und zwar mit der negativen Polarität. Beim Umladen des Kondensators 45 fließt auch ein positiver Strom durch den Schalter 47 (vergleiche Verlauf 51).

Zu einem Zeitpunkt T1 ist der Kondensator 45 also umgeladen, und der Stromimpuls kann erzeugt werden. Nun ist der Schalter 47 geöffnet, und die Steuereinrichtung kann das Schaltelement 48 jederzeit schließen, um die Einkopplung des Stromes in die Schaltungsanordnung 38 zu bewirken. Wird nun das Schaltelement 48 durch die Steuereinrichtung geschlossen, so fließt über die Spule 44 und den Kondensator 45 elektrische Ladung, bis der Kondensator 45 wieder mit positiver Spannung aufgeladen ist. Dies ist anhand des Verlaufs 52 in FIG 4 gut erkennbar. Der positive Verlauf des Stromes durch den Kondensator 45, welcher dem Verlauf 52 in FIG 4 entspricht, stellt also den erzeugten Stromimpuls dar. Dieser entspricht in seiner Höhe dem Stromimpuls gemäß FIG 2, und dies bei einer deutlich kleineren Größe des Kondensators 45 gegenüber dem Kondensator 14 gemäß FIG 1. Während in dem Beispiel gemäß FIG 2 nämlich ein Kondensator 14 mit einer Kapazität von 316 µF verwendet wurde, beträgt die Kapazität des Kondensators 45 gemäß FIG 3 lediglich 79 µF. Einerseits kann somit bei einem deutlich kleineren und damit auch günstigeren Kondensator 45 ein gleicher Stromimpuls in der Schaltungsanordnung 38 erzeugt werden; andererseits fließt über den Thyristor 47 im Vergleich zum Stand der Technik auch ein geringerer Strom, so dass die Belastung des Thyristors 47 deutlich geringer (nämlich um Faktor größer 2) als bei dem Thyristor 15 in FIG 2 ist. Würde man auf der anderen Seite die Kapazität des Kondensators 45 gleich wie im Stand der Technik lassen, so ließe sich damit mehr als der doppelte Stromimpuls, also ca. 180 kA erzeugen, nämlich im Vergleich zu 75 kA.

Mit weiterem Bezug auf FIG 4 fließt selbst beim aufgeladenen Kondensator 45 durch das Schaltelement 48 weiterhin elektrischer Strom (Verlauf 53 gemäß FIG 4), nämlich aufgrund des Varistors 46.

Die in FIG 4 dargestellten Verläufe ergeben sich bei Verwendung eines Kondensators 45 mit einer Kapazität von 79 µF. Der maximale Strom durch den Schalter 47 beträgt 82 kA, und der wirksame Stromimpuls hat die Amplitude von 78 kA. Diese Amplitude ist vergleichbar mit dem Maximum 22 gemäß FIG 2, wobei an dieser Stelle angemerkt sei, dass in dem Beispiel gemäß FIG 2 ein deutlich größerer Kondensator 14 verwendet wurde, nämlich ein Kondensator mit einer Kapazität von 316 µF (im Vergleich zu 79 µF des Kondensators 45 gemäß FIG 3).

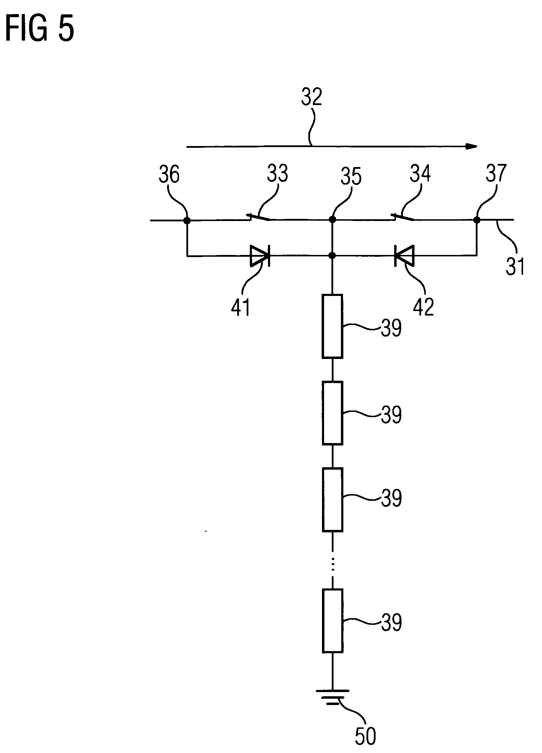

Wie aus FIG 5 hervorgeht, können zwischen dem Knoten 35 und dem Bezugspotenzial 50 auch mehrere solche Schaltungsanordnungen 38 bzw. mehrere solche Schaltzellen 39 eingesetzt werden. Die Anzahl der eingesetzten Schaltungsanordnungen 38 hängt dabei vorzugsweise von der verwendeten Spannung an der Übertragungsleitung 31 ab. Die einzelnen Schaltzellen 39 können alle oder einzeln oder aber in einer beliebigen Gruppe gezündet werden. Dies bedeutet insbesondere, dass auch eine vorgebbare Untermenge der Schaltzellen 39 gleichzeitig gezündet werden können. Auf diese Weise kann der Stromimpuls leicht an den tatsächlichen zu trennenden Strom angepasst werden.

Zusammenfassend kann daher festgestellt werden, dass im Vergleich zu der Schaltungsanordnung 1 gemäß Stand der Technik (FIG 1) in der vorgeschlagenen Schaltungsanordnung 38 zur Erzeugung eines Stromimpulses also die Diode 18 durch das einschaltbare Schaltelement 48 ersetzt wird. Der Widerstand 17 wird dadurch überflüssig und kann entfernt werden. Zur Begrenzung des Stromanstieges befindet sich in Serie zum Kondensator 45 die Spule 44. Der LC-Schwingkreis 43 ist somit ein Serienschwingkreis, welcher so die Stromanstiege der beiden Halbleiterschalter 47, 48 begrenzt. Der Unterschied zum Stand der Technik besteht folglich darin, dass aufgrund des zusätzlichen Schaltelements 48 der Kondensator 45 zunächst vollständig auf die negative Spannung aufgeladen werden kann und so bei gleicher Kapazität mehr Ladung für den Stromimpuls zur Verfügung steht. Für einen vergleichbaren Stromimpuls kann folglich eine deutlich kleinere Kapazität (ca. Faktor 4, abhängig vom Szenario) verwendet werden. Die Größe der Kapazität hängt direkt mit der beim Abschalten aufzunehmenden Energie zusammen, sodass diese durch das neue Konzept ebenfalls reduziert werden kann.

Außerdem reduziert ein kleinerer Kapazitäts-Nennwert die Baugröße des Hochspannungskondensators 45 deutlich.

## Patentansprüche

1. Schaltungsanordnung (38) zur Reduktion der Stromstärke eines in einer Hochspannungs-Gleichstrom-Übertragungsleitung (31) fließenden elektrischen Stromes, insbesondere zum Erzeugen eines Nulldurchgangs des Stromes, mit:
- einem Schaltungsknoten (40) zum Verbinden mit der Hochspannungs-Gleichstrom-Übertragungsleitung (31),
- einem zwischen dem Schaltungsknoten (40) und einem Bezugspotential (50) geschalteten LC-Schwingkreis (43) zum Erzeugen eines Stromimpulses von der Hochspannungs-Gleichstrom-Übertragungsleitung (31) über die Schaltungsanordnung (38) hin zum Bezugspotential (50), wobei der LC-Schwingkreis (43) einen Kondensator (45) und eine Spule (44) aufweist, und
- einem zwischen dem Schaltungsknoten (40) und dem LC-Schwingkreis (43) gekoppelten Schaltelement (48) zum Koppeln der Hochspannungs-Gleichstrom-Übertragungsleitung (31) mit dem LC-Schwingkreis (43),
**dadurch gekennzeichnet, dass**
das Schaltelement (48) ein steuerbares Schaltelement (48) mit einem Steueranschluss ist.

2. Schaltungsanordnung (38) nach Anspruch 1, **dadurch gekennzeichnet, dass** das Schaltelement (48) ein Thyristor, ein IGBT oder ein IGCT ist.

3. Schaltungsanordnung (38) nach Anspruch 1 oder 2, **dadurch gekennzeichnet, dass** der LC-Schwingkreis (43) ein Serienschwingkreis ist.

4. Schaltungsanordnung (38) nach einem der vorhergehenden Ansprüche, **dadurch gekennzeichnet, dass** die Schaltungsanordnung (38) eine Steuereinrichtung aufweist, welche dazu eingerichtet ist, vor dem Schließen des Schaltelements (48) zunächst ein Umladen des Kondensators (45) zu bewirken.

5. Schaltungsanordnung (38) nach einem der vorhergehenden Ansprüche, **dadurch gekennzeichnet, dass** parallel zu dem LC-Schwingkreis (43) ein von dem Schaltelement (48) separater elektrischer Schalter (47) gekoppelt ist.

6. Schaltungsanordnung (38) nach Anspruch 5, **dadurch gekennzeichnet, dass** die Schaltungsanordnung (38) eine Steuereinrichtung aufweist, welche zum Ansteuern des Schaltelements (48) und des Schalters (47) ausgebildet ist, derart, dass jeweils maximal wahlweise entweder nur der Schalter (47) oder nur das Schaltelement (48) leitend geschaltet ist.

7. Schaltungsanordnung (38) nach einem der vorhergehenden Ansprüche, **dadurch gekennzeichnet, dass** ein Widerstand (46), insbesondere ein Varistor, parallel zum Kondensator (45) geschaltet ist.

8. Hochspannungs-Gleichstrom-Übertragungsanlage (30) mit einer Hochspannungs-Gleichstrom-Übertragungsleitung (31) zum Übertragen eines elektrischen Stromes, mit einem in die Hochspannungs-Gleichstrom-Übertragungsleitung (31) integrierten elektrischen Schalter (33, 34) zum Unterbrechen eines Stromkreises in der Hochspannungs-Gleichstrom-Übertragungsleitung (31), und mit einer mit der Hochspannungs-Gleichstrom-Übertragungsleitung (31) verbundenen Schaltungsanordnung (38) nach einem der vorhergehenden Ansprüche.

9. Hochspannungs-Gleichstrom-Übertragungsanlage (30) nach Anspruch 8, **dadurch gekennzeichnet, dass** die Schaltungsanordnung (38) als Schaltmodul (39) ausgebildet ist und zumindest zwei solche Schaltmodule (39) in Reihe zwischen der Hochspannungs-Gleichstrom-Übertragungsleitung (31) und dem Bezugspotential (50) geschaltet sind.

10. Verfahren zum Reduzieren der Stromstärke eines elektrischen Stromes, der über eine Hochspannungs-Gleichstrom-Übertragungsleitung (31) übertragen wird, mithilfe einer elektrischen Schaltungsanordnung (38), welche über einen Schaltungsknoten (40) mit der Hochspannungs-Gleichstrom-Übertragungsleitung (31) verbunden ist, wobei zum Reduzieren der Stromstärke ein Stromimpuls in der Schaltungsanordnung (38) mittels eines zwischen dem Schaltungsknoten (40) und einem Bezugspotential (50) geschalteten LC-Schwingkreises erzeugt wird, indem die Hochspannungs-Gleichstrom-Übertragungsleitung (31) über ein Schaltelement (48) mit dem LC-Schwingkreis (43) gekoppelt wird,
**dadurch gekennzeichnet, dass**
mittels einer Steuereinrichtung an einem Steueranschluss des Schaltelements (48) ein Steuersignal bereitgestellt wird, mittels welchem das Schaltelement (48) leitend geschaltet wird und hierdurch die Hochspannungs-Gleichstrom-Übertragungsleitung (31) mit dem LC-Schwingkreis (43) zum Erzeugen des Stromimpulses gekoppelt wird.

## Claims

1. Circuit arrangement (38) for reducing the current intensity of an electric current flowing in a HVDC transmission line (31), in particular for generating a zero crossing of the current, comprising:
- a circuit node (40) for connection to the HVDC transmission line (31),
- an LC resonant circuit (43) connected between the circuit node (40) and a reference potential (50) for generating a current pulse from the HVDC transmission line (31) via the circuit arrangement (38) towards the reference potential (50), wherein the LC resonant circuit (43) has a capacitor (45) and a coil (44), and
- a switching element (48) coupled between the circuit node (40) and the LC resonant circuit (43) for coupling the HVDC transmission line (31) to the LC resonant circuit (43),
**characterized in that**
the switching element (48) is a controllable switching element (48) having a control connection.

2. Circuit arrangement (38) according to Claim 1, **characterized in that** the switching element (48) is a thyristor, an IGBT or an IGCT.

3. Circuit arrangement (38) according to Claim 1 or 2, **characterized in that** the LC resonant circuit (43) is a series resonant circuit.

4. Circuit arrangement (38) according to one of the preceding claims, **characterized in that** the circuit arrangement (38) has a control device, which is designed to first effect recharging of the capacitor (45) prior to closing of the switching element (48).

5. Circuit arrangement (38) according to one of the preceding claims, **characterized in that** an electrical switch (47) which is separate from the switching element (48) is coupled in parallel with the LC resonant circuit (43).

6. Circuit arrangement (38) according to Claim 5, **characterized in that** the circuit arrangement (38) has a control device, which is designed to actuate the switching element (48) and the switch (47) in such a way that in each case at most optionally either only the switch (47) or only the switching element (48) is switched on.

7. Circuit arrangement (38) according to one of the preceding claims, **characterized in that** a resistor (46), in particular a varistor, is connected in parallel with the capacitor (45).

8. HVDC transmission system (30) comprising an HVDC transmission line (31) for transmitting an electric current, comprising an electrical switch (33, 34) which is integrated in the HVDC transmission line (31) for interrupting a circuit in the HVDC transmission line (31), and comprising a circuit arrangement (38) according to one of the preceding claims which is connected to the HVDC transmission line (31).

9. HVDC transmission system (30) according to Claim 8, **characterized in that** the circuit arrangement (38) is in the form of a switching module (39) and at least two such switching modules (39) are connected in series between the HVDC transmission line (31) and the reference potential (50).

10. Method for reducing the current intensity of an electric current which is transmitted over an HVDC transmission line (31) with the aid of an electrical circuit arrangement (38), which is connected to the HVDC transmission line (31) via a circuit node (40), wherein, in order to reduce the current intensity, a current pulse is generated in the circuit arrangement (38) by means of an LC resonant circuit connected between the circuit node (40) and a reference potential (50) by virtue of the HVDC transmission line (31) being coupled to the LC resonant circuit (43) via a switching element (48),
**characterized in that**
a control signal is provided by means of a control device at a control connection of the switching element (48), by means of which control signal the switching element (48) is switched on and, as a result, the HVDC transmission line (31) is coupled to the LC resonant circuit (43) for generating the current pulse.

## Revendications

1. Montage ( 38 ) de réduction de l'intensité d'un courant électrique passant dans une ligne ( 31 ) de transmission de courant continu à haute tension, notamment pour produire un passage par zéro du courant, comprenant
- un noeud ( 40 ) du montage pour la liaison à la ligne ( 31 ) de transmission de courant continu à haute tension,
- un circuit ( 43 ) oscillant LC monté entre le noeud ( 40 ) du montage et un potentiel ( 50 ) de référence pour produire une impulsion de courant de la ligne ( 31 ) de transmission de courant continu à haute tension au potentiel ( 50 ) de référence en passant par le montage ( 38 ), le circuit ( 43 ) oscillant LC ayant un condensateur ( 45 ) et une bobine ( 44 ) et
- un élément ( 48 ) de commutation monté entre le noeud ( 40 ) du montage et le circuit ( 43 ) oscillant LC pour coupler la ligne ( 31 ) de transmission de courant continu à haute tension au circuit ( 43 ) oscillant LC,
**caractérisé en ce que**
l'élément ( 48 ) de commutation est un élément ( 48 ) de commutation qui peut être commandé et qui a une borne de commande.

2. Montage ( 38 ) suivant la revendication 1, **caractérisé en ce que** l'élément ( 48 ) de commutation est un thyristor, un IGBT ou un IGCT.

3. Montage ( 38 ) suivant la revendication 1 ou 2, **caractérisé en ce que** le circuit ( 43 ) oscillant LC est un circuit oscillant série.

4. Montage ( 38 ) suivant l'une des revendications précédentes, **caractérisé en ce que** le montage ( 38 ) a un dispositif de commande conçu pour provoquer, par la fermeture de l'élément ( 48 ) de commutation, d'abord une recharge du condensateur ( 45 ).

5. Montage ( 38 ) suivant l'une des revendications précédentes, **caractérisé en ce qu'**en parallèle au circuit ( 43 ) oscillant LC, est monté un commutateur ( 47 ) électrique distinct de l'élément ( 48 ) de commutation.

6. Montage ( 38 ) suivant la revendication 5, **caractérisé en ce que** le montage ( 38 ) a un dispositif de commande constitué pour commander l'élément ( 48 ) de commutation et le commutateur ( 47 ) de manière à ce que respectivement au maximum au choix, soit seulement le commutateur ( 47 ), soit seulement l'élément ( 48 ) de commutation soit passant.

7. Montage ( 38 ) suivant l'une des revendications précédentes, **caractérisé en ce qu'**une résistance ( 46 ), notamment une varistance, est montée en parallèle au condensateur ( 45 ).

8. Installation ( 30 ) de transmission de courant continu à haute tension comprenant une ligne ( 31 ) de transmission de courant continu à haute tension pour la transmission d'un courant électrique, comprenant un commutateur ( 33, 34 ) électrique intégré à la ligne ( 31 ) de transmission de courant continu à haute tension pour interrompre un circuit dans la ligne ( 31 ) de transmission de courant continu à haute tension et comprenant un montage ( 38 ) suivant l'une des revendications précédentes relié à la ligne ( 31 ) de transmission de courant continu à haute tension.

9. Installation ( 30 ) de transmission de courant continu à haute tension suivant la revendication 8, **caractérisé en ce que** le montage ( 38 ) est constitué sous la forme d'un module ( 39 ) de commutation et au moins deux modules ( 39 ) de commutation de ce genre sont montés en série entre la ligne ( 31 ) de transmission de courant continu à haute tension et le potentiel ( 50 ) de référence.

10. Procédé de réduction de l'intensité d'un courant électrique qui est transmis par une ligne ( 31 ) de transmission de courant continu à haute tension à l'aide d'un montage ( 38 ) électrique qui est relié à la ligne ( 31 ) de transmission de courant continu à haute tension par un noeud ( 40 ) de montage, dans lequel, pour réduire l'intensité du courant, on produit une impulsion de courant dans le montage ( 38 ) au moyen d'un circuit oscillant LC monté entre le noeud ( 40 ) du montage et un potentiel ( 50 ) de référence en couplant la ligne ( 31 ) de transmission de courant continu à haute tension au circuit ( 43 ) oscillant LC par un élément ( 48 ) de commutation,
**caractérisé en ce que**
on produit au moyen d'un dispositif de commande, sur une borne de commande de l'élément ( 48 ) de commutation un signal de commande au moyen duquel l'élément ( 48 ) de commutation devient passant et on couple ainsi la ligne ( 31 ) de transmission de courant continu à haute tension au circuit ( 43 ) oscillant LC pour produire l'impulsion de courant.
